# EUROPÄISCHE PATENTSCHRIFT

(11) **EP 1 828 330 B1**
(45) Veröffentlichungstag und Bekanntmachung des Hinweises auf die Patenterteilung: **18.04.2012**
(21) Anmeldenummer: 05792283.3
(22) Anmeldetag: 25.10.2005
(51) Int. Cl.: C09D 183/16

(54) **BESCHICHTUNG AUF POLYSILAZANBASIS SOWIE DEREN VERWENDUNG ZUR BESCHICHTUNG VON FOLIEN, INSBESONDERE POLYMERFOLIEN**
POLYSILAZANE-BASED COATING AND USE THEREOF FOR COATING FILMS, ESPECIALLY POLYMER FILMS
REVETEMENT A BASE DE POLYSILAZANE ET SON UTILISATION POUR ENDUIRE DES FILMS, NOTAMMENT DES FILMS POLYMERES

(30) Priorität: 23.11.2004 DE 102004056394
(43) Veröffentlichungstag der Anmeldung: 05.09.2007
(73) Patentinhaber: AZ Electronic Materials (Luxembourg) S.à.r.l., 1653 Luxembourg (LU)
(72) Erfinder: BRAND, Stefan, 69493 Hirschberg-Leutershausen (DE); DIERDORF, Andreas, 65719 Hofheim/Ts. (DE); LIEBE, Hubert, 65207 Wiesbaden (DE); WACKER, Andreas, 68165 Mannheim (DE)
(74) Vertreter: Rippel, Hans Christoph
(86) Internationale Anmeldenummer: PCT/EP2005/011425
(87) Internationale Veröffentlichungsnummer: WO 2006/056285

(56) Entgegenhaltungen:
- EP-A- 0 745 974
- EP-A- 0 899 091
- EP-A- 1 170 336
- US-A1- 2003 164 113
- PATENT ABSTRACTS OF JAPAN Bd. 2003, Nr. 08, 6. August 2003 (2003-08-06) & JP 2003 103691 A (ASAHI GLASS CO LTD), 9. April 2003 (2003-04-09)
- PATENT ABSTRACTS OF JAPAN Bd. 1995, Nr. 02, 31. März 1995 (1995-03-31) & JP 06 306329 A (TONEN CORP), 1. November 1994 (1994-11-01)
- PATENT ABSTRACTS OF JAPAN Bd. 1998, Nr. 05, 30. April 1998 (1998-04-30) & JP 10 016150 A (TEIJIN LTD), 20. Januar 1998 (1998-01-20)
- PATENT ABSTRACTS OF JAPAN Bd. 1996, Nr. 11, 29. November 1996 (1996-11-29) & JP 08 174763 A (DAINIPPON PRINTING CO LTD), 9. Juli 1996 (1996-07-09)
- PATENT ABSTRACTS OF JAPAN Bd. 1997, Nr. 11, 28. November 1997 (1997-11-28) & JP 09 174782 A (TEIJIN LTD), 8. Juli 1997 (1997-07-08)

## Beschreibung

Die vorliegende Erfindung betrifft ein Verfahren zur Beschichtung von Folien auf Polysilazanbasis.

Folien aus Kunststoffen spielen eine wichtige Rolle in vielen Bereichen der Technik sowie für Gegenstände des täglichen Bedarfs.

Dabei werden je nach Anwendung an die Eigenschaften der Folien immer höhere Anforderungen gestellt. Im Bereich der Verpackungsmaterialien ist dies zum Beispiel eine Barrierewirkung gegenüber Sauerstoff, Kohlendioxid oder Wasser. Bei technischen Folien wird beispielsweise eine höhere Kratzfestigkeit, Chemikalienbeständigkeit oder eine UV-Schutzwirkung gefordert.

Anforderungen an eine Barrierewirkung werden vor allem im Bereich der Verpackungsmaterialien gestellt. Stand der Technik sind verschiedene Verfahren, um die unzureichende Sperrwirkung der reinen Polymere zu verbessern.

Bei der Herstellung so genannter Folienverbunde werden mehrere Folien, von denen mindestens eine aus einem Material mit einer erhöhten Barrierewirkung besteht durch Co-Extrusion, Laminieren oder Kaschieren zusammengefügt.

Ein Folienmaterial mit einer erhöhten Barrierewirkung gegenüber Sauerstoff ist beispielsweise EVOH. Dieses Polymer hat allerdings den Nachteil, dass die Sperrwirkung der Polymerfolie feuchtigkeitsabhängig ist und bei hohen Luftfeuchtigkeiten stark abnimmt.

Durch Vakuumbedampfung lassen sich Barriereschichten auf Polymerfolien auftragen. Dabei kann es sich um metallische Schichten, wie beispielsweise Aluminium oder oxidische Schichten wie Al₂O₃ oder SiOₓ handeln. Mit Aluminium bedampfte Folien haben den Nachteil, dass diese nicht transparent sind. Die Herstellung von transparenten Beschichtungen wie SiOₓ über das Chemical Vapor Deposition (CVD) Verfahren ist sehr aufwendig und daher mit einem enormen apparativen und finanziellen Aufwand verbunden. Darüber hinaus können die nicht-stöchiometrischen SiOₓ-Schichten eine Gelbfärbung aufweisen; die nicht gewünscht ist.

Aus der Literatur ist bekannt, dass Polysilazane auf Kunststoffen die Barrierewirkung erhöhen können, jedoch sind bisher nur Verfahren zur Beschichtung und Härtung bekannt, bei denen die mit Polysilazan beschichteten Kunststoffe über einen längeren Zeitraum bei erhöhter Temperatur, Feuchtigkeit oder mit bestimmten Chemikalien behandelt werden muss, so dass diese sich nicht für einen kontinuierlichen, wirtschaftlichen Prozess zur Folienbeschichtung eignen.

US 5,747,623 beschreibt die Herstellung von keramischen Schichten aus Polysilazanen. In den Beispielen 20 und 21 wird auch die Beschichtung von PET-Folien mit Perhydropolysilazan erwähnt. Die Aushärtung der Beschichtung erfolgt durch Erhitzen auf 150°C für eine Stunde gefolgt von einer dreistündigen Behandlung in verdünnter Salzsäure bzw. bei 95°C und 80 % relativer Luftfeuchte. Beide Methoden sind für ein industrielles Verfahren zur Beschichtung von Polymerfolien ungeeignet.

JP-81 74 763 beschreibt ein Verpackungsmaterial, das mit einer Schutzschicht aus Perhydropolysilazan versehen ist. Dabei wird nicht genau spezifiziert, um welche Polysilazanlösung es sich handelt und ob sie einen Katalysator enthält. Die Härtung der Beschichtung erfolgt durch Trocknen und anschließendes Kalzinieren in einer oxidativen Atmosphäre. Über die genauen Bedingungen, die zur Aushärtung benötigt werden, werden in den Beispielen keine Angaben gemacht.

JP-100 16 150 beschreibt die Verwendung eines Polysilazans zur Erzeugung einer Barriereschicht auf einer Polymerfolie. In dem beschriebenen Beispiel erfolgt die Konditionierung des Polysilazans innerhalb einer Zeitdauer von 150·h bei einer Temperatur von 60-70°C. Dieses Verfahren ist somit ungeeignet, um im industriellen Maßstab für Folienbeschichtungen verwendet zu werden.

JP-93 00 522 beschreibt die Verwendung eines Polysilazans zur Herstellung einer Barriereschicht auf einem bioabbaubaren Polymer. Im Beispiel 20 wird die Applikation des Polysilazans beschrieben. Die Härtung erfolgt in einen zweistufigen Prozess, zunächst innerhalb 1 h bei 120°C, gefolgt von einem Konditionierungsschritt bei 80°C und 90 % relativer Luftfeuchtigkeit innerhalb von 2 h. Auch dieses Verfahren stellt keinen wirtschaftlichen Beschichtungsprozess für eine industrielle Folienbeschichtung dar.

EP-781 815 A1 beschreibt Verfahren zur Herstellung einer keramischen Beschichtung ausgehend von Polysilazanen. In den Beispielen 27 bis 59 wird auch die kontinuierliche Beschichtung von Polymerfolien beschrieben. Dabei werden verschiedene Methoden zur Konditionierung der Beschichtung beschrieben, die aus einer Kombination von zwei von insgesamt vier möglichen Schritten bestehen.

Ein Konditionierungsschritt ist das Durchfahren einer Trocknungszone bei erhöhter Temperatur, die zusätzlich Wasserdampf enthält. Alternativ kann die Trocknungszone anstatt des Wasserdampfes auch verschiedene gasförmige Chemikalien (Wasserstoffperoxid, Chlorwasserstoff, Essigsäure oder Amine) enthalten. Ein dritter möglicher Schritt ist das Durchfahren eines Tauchbades (gefüllt mit Wasser, anorganischen oder organischen Säuren, Natronlauge, Aminen oder Wasserstoffperoxid). Letztlich ist die Lagerung der beschichteten Folie unter definierten Klimabedingungen über einen längeren Zeitraum ein Schritt zur Konditionierung.

Die beschriebenen Methoden zur Konditionierung der Polysilazanbeschichtung sind zum einen sehr zeitaufwendig, da die einzelnen Schritte zwischen einigen Minuten und mehreren Stunden benötigen und damit für einen industriellen kontinuierlichen Beschichtungsprozess nicht rentabel sind. Zudem ist die Behandlung der Folie mit nicht unbedenklichen Chemikalien, die in einem aufwendigen Prozess aufgebracht werden müssen, problematisch. Solche Verfahren erfordern einen großen apparativen Aufwand, wobei sich zusätzlich die Problematik des Recyclings bzw. der Entsorgung der verwendeten Chemikalien ergibt, zudem müssen überschüssige Chemikalien von der Polymerfolie abgewaschen werden, was einen zusätzlichen Arbeitsschritt notwendig macht. Alle diese Verfahren weisen als Gemeinsamkeit auf, dass mit Polysilazanen zwar Barriereschichten auf Polymermaterialien aufgebracht werden können, die Aushärtung der Beschichtung erfordert aber so lange Prozesszeiten bzw. ist technisch so aufwendig, dass sie für einen technischen Prozess, der einen hohen Durchsatz erfordert, um wirtschaftlich sein zu können, ungeeignet sind.

Der vorliegenden Erfindung lag somit die Aufgabe zugrunde, ein Verfahren zur kontinuierlichen Beschichtung für Folien, insbesondere für Polymerfolien auf Polysilazanbasis zu entwickeln, mit dem bestimmte anwendungstechnisch relevante Eigenschaften der Folien verbessert werden können und das zudem kostengünstig ist und eine schnellem Beschichtung der Folie gewährleistet.

Überraschenderweise wurde nun gefunden, dass Beschichtungen auf Polysilazanbasis in einem kontinuierlichen Beschichtungsprozess, der nur einen kurzen Trocknungsschritt beinhaltet, innerhalb kurzer Prozesszeiten auf Folien aufgetragen und konditioniert werden können, und gleichzeitig bestimmte anwendungstechnische Eigenschaften bei Folien, insbesondere Polymerfolien, wie Barrierewirkung, Chemikalienbeständigkeit, UV-Absorption oder Kratzfestigkeit verbessert werden. Gegenstand der Erfindung ist daher ein Verfahren zur kontinuierlichen Beschichtung von Folien wobei man eine Lösung enthaltend ein Polysilazan oder eine Mischung von Polysilazanen der allgemeinen Formel 1

-(SiR'R"-NR"')ₙ- (1)

wobei R', R", R'" gleich oder unterschiedlich sind und unabhängig voneinander für Wasserstoff oder einen gegebenenfalls substituierten Alkyl-, Aryl- oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist, in einem Lösemittel und mindestens einen Katalysator auf eine Folie aufbringt und anschließend eine Trocknungsstrecke durchlaufen lässt und die Trocknung durch Temperaturbehandlung, IR- oder NIR-Strahlung im Wellenlängenbereich von 12 bis 1,2 Mikrometer bzw. 1,2 bis 0,8 Mikrometer, bei einer Strahlungsintensität von 5 - 1000 kW/m² erfolgt. Besonders geeignet sind dabei solche Polysilazane, in denen R_{'}, R", R"' unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)propyl, 3-(Trimethoxysilylpropyl) stehen.

In einer bevorzugten Ausführungsform werden Perhydropolysilazane der Formel 2 für die erfindungsgemäße Beschichtung verwendet. 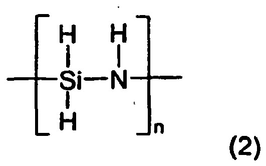 In einer weiteren bevorzugten Ausführungsform enthält die erfindungsgemäße Beschichtung Polysilazane der Formel (3),

-(SiR'R"-NR"')ₙ-(SiR*R**-NR***)ₚ- (3)

wobei R', R", R"', R*, R** und R*** unabhängig voneinander für Wasserstoff oder einen gegebenenfalls substituierten Alkyl-, Aryl-, Vinyl oder (Trialkoxysilyl)alkylRest stehen, wobei es sich bei n und p um eine ganze Zahl handelt und n so bemessen ist, dass das Polysilazan ein zahlenmittleres Molekulargewicht von 150 bis 150.000 g/mol aufweist. Insbesondere bevorzugt sind Verbindungen in denen
- R', R"' und R*** für Wasserstoff und R", R* und R** für Methyl stehen;
- R', R'" und R*** für Wasserstoff und R", R* für Methyl und R** für Vinyl stehen;
- R', R"', R* und R*** für Wasserstoff und R" und R** für Methyl stehen. Ebenfalls bevorzugt eingesetzt werden ebenfalls Polysilazane der Formel (4) eingesetzt

   -(SiR'R"-NRI"')ₙ-(SiR*R**-NR***)ₚ-(SiR¹, R²-NR³)_{q}- (4)

   wobei R_{'}, R", R"_{'}, R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.
   Insbesondere bevorzugt sind Verbindungen in denen
- R', R'" und R*** für Wasserstoff und R", R*, R** und R² für Methyl, R³ für (Triethoxysilyl)propyl und R¹ für Alkyl oder Wasserstoff stehen.
Bei der kontinuierlichen Beschichtung der Folien mit der Polysilazanlösung von der Auftrag der Polysilazanlösung auf die Polymerfolie beispielsweise durch Walzenauftrag, Tauchen oder Spritzen erfolgen.

Schließlich sind die erfindungsgemäß beschichteten Polymerfolien Gegenstand der Erfindung.

Die Härtung der Polysilazane im kontinuierlichen Folien-Beschichtungsverfahren erfolgt entweder durch das Durchfahren eines Ofens oder das Passieren einer Trocknungsstrecke die mit IR-, oder NIR-Strahlern ausgestattet ist. Dabei wird im Wellenlängenbereich von 12 bis 1,2 Mikrometer bzw. 1,2 bis 0,8 Mikrometer gearbeitet. Die Strahlungsintensitäten liegen vorzugsweise im Bereich von 5 bis 1000 kW/m². Die Temperatur bzw. die Verweilzeit im Ofen bzw. die Strahlungsintensität der IR- oder NIR-Strahler wird dabei so eingestellt, dass es zu keiner überhöhten Erwärmung und damit zur Beschädigung des temperaturempfindlichen Polymermaterials kommt.

Polysilazane zeigen eine sehr gute Haftung auf verschiedensten Untergründen, auch auf polymeren organischen Materialien. Geeignete Polymerfolien können beispielsweise aus Polyolefinen wie Polyethylen, Polypropylen, Polyestern wie Polyethylenterephthalat (PET), Polyethylennaphthalat (PEN), Polyamiden, PVC, Polycarbonat, PMMA oder aus Copolymeren der genannten Polymermaterialien bestehen.

Auch kann die Polymerfolie bereits über eine dünne SiOx Schicht, die über einen vorangegangenen Prozess aufgebracht wurde, verfügen, ohne dass es zu einer Beeinträchtigung der Haftung kommt.

Die Polysilazanlösung wird in einem kontinuierlichen Verfahren appliziert, d.h. der Auftrag auf die Folie erfolgt zum Beispiel über einen Walzenauftrag, Tauchen oder durch Aufsprühen. Dabei kann der Auftrag entweder auf einer Seite der Folie oder gleichzeitig auf Vorder- und Rückseite erfolgen.

Ein besonders einfaches Verfahren zur einseitigen Beschichtung einer Polymerfolie, stellt das Durchziehen durch ein Tauchbad über eine Umlenkrolle dar. Dabei wird die eine Seite der Folie von der Walze abgedeckt und nur die andere Seite von der Polysilazanlösung benetzt.

Ein weiteres gängiges Verfahren zur Folienbeschichtung ist der Auftrag über eine oder mehrere Walzen. Dabei wird die Polysilazanlösung auf eine Walze aufgebracht, die die Lösung direkt oder indirekt auf die Polymerfolie überträgt.

Die Konditionierung der Polysilazanbeschichtung erfolgt in einem kontinuierlichen Trocknungsprozess, entweder in einem Ofen oder durch IR- oder NIR-Strahlung. Zusätzlich ist es möglich, die Folie vor, während oder nach der Trocknung einer Atmosphäre mit erhöhter Luftfeuchtigkeit auszusetzen. Die Luftfeuchtigkeit während dieses Schrittes beträgt 50 und 100 % relativer Luftfeuchte, bevorzugt 60 bis 80 % relativer Luftfeuchte.

Der Trocknungsprozess erfolgt dabei im Verlauf von sehr kurzer Zeit, d.h. weniger als einer Minute, bevorzugt weniger als 30 Sekunden.

Durch geeignete Wahl der Trockhertemperaturen bzw. IR-Trocknertemperaturen und Bandgeschwindigkeiten können die Polymerfolien auf Basis von Polyolefinen wie Polyethylen, Polypropylen, Polyestern wie Polyethylenterephthalat (PET), Polyethylennaphthalat (PEN), Polyamiden, PVC, Polycarbonat, PMMA oder aus Copolymeren der genannten Polymermaterialien einfach getrocknet werden, wobei die resultierende Folie gute Barrierewerte erzielt.

Insbesondere kann bei einer PET-Folie durch geeignete Foliengesctiwindigkeiten und entsprechender Strahlerleistung eine Aushärtung der Polysilazanschicht bei Temperaturen zwischen 50-100°C, insbesondere 80 - 90°C innerhalb von 10 - 120 Sekunden, insbesondere 20 - 30 Sekunden erfolgen.

Durch diese kurzen Prozesszeiten ist es möglich, über die Dimensionierung der Trocknungsstrecke einen hohen Durchsatz zu erreichen. Bei einer Trocknungsstrecke von 10 m Länge und einer Verweilzeit von 60 Sekunden kann beispielsweise mit einer Geschwindigkeit von 10 m/min beschichtet werden. Im Falle einer Verdopplung der Länge der Strecke auf 20 m und einer kürzeren Verweilzeit von lediglich 15 Sekunden, werden beispielsweise 80 m/min erreicht. Im Falle einer weiteren Halbierung der Verweilzeit erhöht sich die Geschwindigkeit auf 160 m/min.

Der Prozess der Folienbeschichtung kann wiederholt werden, um mehrere Funktionsschichten auf der Polymerfolie übereinander aufzubringen.

Mit den verwendeten Polysilazanbeschichtung ist es möglich, verschiedene anwendungstechnisch relevante Eigenschaften einer Polymerfolie zu verbessern. Die nach der Aushärtung erzeugten Schichten weisen in sehr dünnen Schichtdicke eine sehr gute Schutzwirkung gegenüber Sauerstoff-, Kohlendioxid oder Wasserdampfpermeation auf.

Außerdem können dickere Schichten die Kratzfestigkeit von empfindlichen Polymerfolien verbessern, beispielsweise auf Polycarbonat oder PMMA. Darüber hinaus wird die Chemikalienbeständigkeit der Folien deutlich verbessert, zum Beispiel von Polycarbonatfolien, die sehr empfindlich gegenüber organischen Lösemitteln sind.

Schließlich können durch Zusatz von Additiven, wie beispielsweise Nanopartikeln weitere anwendungstechnisch interessante Eigenschaften erzeugt werden, wie beispielsweise eine UV-absorbierende Funktion durch Zugabe von feinteiligem Zinkoxid oder Titandioxid.

Die ausgehärtete Polysilazanbeschichtung weißt üblicherweise eine Schichtdicke von 0,02 bis 10, bevorzugt 0,1 bis 5, besonders bevorzugt 0,2 bis 3 Mikrometern auf.

Als Lösemittel für die Beschichtung auf Polysilazanbasis eignen sich besonders organische Lösemittel, die kein Wasser sowie keine reaktiven Gruppen (wie Hydroxyl- oder Amingruppen) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Weiterer Bestandteil der Polysilazanbeschichtung können Additive, die z.B. Viskosität der Formulierung, Untergrundbenetzung, Filmbildung oder das Ablüftverhalten beeinflussen oder anorganische Nanopartikel wie beispielsweise SiO₂, TiO₂, ZnO, ZrO₂, Indium-Zinn-Oxid (ITO) oder Al₂O₃ sein.

Bei den verwendeten Katalysatoren kann es sich beispielsweise um organische Amine, Säuren oder Metalle oder Metallsalze oder um Gemische dieser Verbindungen handeln. Der Katalysator wird vorzugsweise in Mengen von 0,01 bis 10 %, insbesondere 0,1 bis 6 %, bezogen auf das Gewicht des Polysilazans eingesetzt.

Beispiele für Aminkatalysatoren sind Ammoniak, Methylamin, Dimethylamin, Trimethylamin, Ethylamin, Diethylamin, Triethylamin, n-Propylamin, Isopropylamin, Di-n-propylamin, Di-isopropylamin, Tri-n-propylamin, n-Butylamin, Isobutylamin, Di-n-butylamin, Di-isobutylamin, Tri-n-butylamin, n-Pentylamin, Di-n-pentylamin, Tri-n-pentylamin, Dicyclohexylamin, Anilin, 2,4-Dimethylpyridin, 4,4-Trimethylenbis-(1-methylpiperidin), 1,4-diazabicyclo(2,2,2)octan, N,N-Dimethylpiperazin, cis-2,6-Dimethylpiperazin, trans-2,5-Dimethylpiperazin, 4,4-Methylenbis(cyclohexylamin), Stearylamin, 1,3-di-(4-Piperidyl)propan, N,N-Dimethylpropanolamin, N,N-Dimethylhexanolamin, N,N-Dimethyloctanolamin, N,N-Diethylethanolamin, 1-Piperidinethanol, 4-Piperidinol.

Beispiele für organische Säuren sind Essigsäure, Propionsäure, Buttersäure, Valeriansäure, Kapronsäure.

Beispiele für Metalle und Metallverbindungen sind Palladium, Palladiumacetat, Palladiumacetylacetonat, Palladiumpropionat, Nickel, Nickelacetylacetonat, Silberpulver, Silberacetylacetonat, Platin, Platinacetylacetonat, Ruthenium, Rutheniumacetylacetonat, Rutheniumcarbonyle, Gold, Kupfer, Kupferacetylacetonat, Aluminiumacetylacetonat, Aluminiumtris(ethylacetoacetat).

Je nach verwendetem Katalysatorsystem spielt die Gegenwart von Feuchtigkeit oder von Sauerstoff eine Rolle bei der Aushärtung der Beschichtung. So kann durch Wahl eines geeigneten Katalysatorsystems die schnelle Härtung bei hoher oder niedriger Luftfeuchtigkeit bzw. bei hohem oder niederem Sauerstoffgehalt erreicht werden.

Vor dem Aufbringen der Beschichtung kann zunächst eine Primerschicht, die zur Verbesserung der Haftung der Polysilazanschicht auf der Polymerfolie beitragen kann, aufgebracht werden. Typische Primer sind solche auf Silan basis wie beispielsweise 3-Aminopropyltriethoxysilan, 3-Glycidyloxypropyltriethoxysilan, 3-Mercaptopropyl-trimethoxysilan, Vinyltriethoxysilan, 3-Methacryloxypropyltrimethoxysilan, N-(2-Aminoethyl)-3-aminopropyltrimethoxysilan, Bis(3-triethoxysilylpropyl)amin, N-(n-Butyl)-3-aminopropyltrimethoxysilan, N-(2-aminoethyl)-3-aminopropylmethyldimethoxysilan.

Außerdem ist es möglich, die Folie vor der Beschichtung in anderer Weise vorzubehandeln, wie beispielsweise durch Beflammung, Corona-Behandlung oder Plasma-Vorbehandlung.

In gleicher Weise können bereits fertig vorgeprimerte Folien verwendet werden, die im Zuge der Herstellung oder danach bereits mit einer Beschichtung versehen wurden, die die Haftung oder Benetzung der Polysilazanlösung verbessert.

Die erfindungsgemäß mit Polysilazan beschichteten Polymerfolien eignen sich ebenfalls dazu, Folienverbunde herzustellen. Dabei werden zwei oder mehrere Folien zu einem Verbundmaterial zusammengefügt, das über bestimmte anwendungstechnische Eigenschaften verfügt, dies ist vor allem für Verpackungsfolien von Relevanz.

### Beispiele

Bei den verwendeten Perhydropolysilazanen handelt es sich um Produkte der Fa. Clariant Japan K.K. Dabei handelt es sich entweder um Lösungen in Xylol (Bezeichnung NP) oder Di-n-butylether (Bezeichnung NL). Die Lösungen enthalten als Katalysatoren entweder Amine, Metalle oder Metallsalze.

In den folgenden Beispielen sind Teile und Prozentangaben auf das Gewicht bezogen.

### Beispiel 1 (Kontinuierliche Beschichtung einer PET-Folie)

Eine PET-Folie von 23 Mikrometern Dicke wird mit einer Geschwindigkeit von 3 m/min kontinuierlich über eine Umlenkrolle durch eine Tauchwanne, die mit einer Mischung aus einer 20%igen Perhydropolysilazanlösung NP110-20 (Clariant Japan), die mit Butylacetat auf eine Konzentration von 5 % herunter verdünnt wurde, gefüllt ist, gezogen. Bei diesem Verfahren kommt nur die Vorderseite der Folie mit der Perhydropolysilazanlösung in Berührung, die Rückseite wird durch die Umlenkrolle verdeckt. Anschließend wird die Folie durch einen Infrarottrocknungskanal mit einer Länge von 60 cm geführt. Die Verweilzeit in dem Trocknungskanal beträgt somit ca. 12 Sekunden, die Folie wird dabei auf eine Temperatur von 60°C erhitzt. Es resultiert eine klare und transparente, einseitig beschichtete Folie. Die Dicke der Beschichtung beträgt ca. 500 nm. Die Sauerstoffpermeabilität einer so beschichteten Folie wird mit einem MOCON Oxtrans-Gerät bei 0 % relativer Luftfeuchte bestimmt. Der gemessene Wert beträgt 14 ml/(d m² bar). Eine unbeschichtete Folie weißt im Vergleich dazu eine Sauerstoffpermeabilität von 85 ml/(d m² bar) auf.

### Beispiel 2:

Eine PET-Folie von 23 Mikrometern Dicke wird mit einer Geschwindigkeit von 3 m/min kontinuierlich über eine Umlenkrolle durch eine Tauchwanne gezogen, in der sich eine 5 %ige Perhydropolysilazanlösung [hergestellt aus einer 20 %igen Perhydropolysilazanlösung NL120 A-20 (Clariant Japan) und Dibutylether] befindet. Bei diesem Verfahren kommt nur die Vorderseite der Folie mit der Perhydropolysilazanlösung in Berührung, die Rückseite wird durch die Umlenkrolle verdeckt. Anschließend wird die Folie durch einen Infrarottrocknungskanal mit einer Länge von 60 cm geführt. Die Verweilzeit in dem Trocknungskanal beträgt somit ca. 12 Sekunden, die Folie wird dabei auf eine Temperatur von 60°C erhitzt. Es resultiert eine klare und transparente, einseitig beschichtete Folie. Die Dicke der Beschichtung beträgt ca. 500 nm.

Die Sauerstoffpermeabilität einer so beschichteten Folie wird mit einem MOCON Oxtrans-Gerät bei 0 % relativer Luftfeuchte bestimmt. Der gemessene Wert beträgt 12 ml/(d m² bar).

### Beispiel 3 (Kontinuierliche Beschichtung einer PET-Folie)

Eine PET-Folie von 23 Mikrometern Dicke auf die zuvor im Hochvakuum eine SiOx Schicht aufgebracht wurde, wird mit einer Geschwindigkeit von 3 m/min kontinuierlich über eine Umlenkrolle durch eine Tauchwanne gezogen, in der sich eine 5 %ige Perhydropolysilazanlösung [hergestellt aus einer 20 %igen Perhydropolysilazanlösung NL120 A-20 (Clariant Japan) und Dibutylether] befindet. Bei diesem Verfahren kommt nur die Vorderseite der Folie mit der Perhydropolysilazanlösung in Berührung, die Rückseite wird durch die Umlenkrolle verdeckt. Anschließend wird die Folie durch einen Infrarottrocknungskanal mit einer Länge von 60 cm geführt. Die Verweilzeit in dem Trocknungskanal beträgt somit ca. 12 Sekunden, die Folie wird dabei auf eine Temperatur von 60°C erhitzt. Es resultiert eine klare und transparente, einseitig beschichtete Folie. Die Dicke der Beschichtung beträgt ca. 500 nm.

Die Sauerstoffpermeabilität einer so beschichteten Folie wird mit einem MOCON Oxtrans-Gerät bei 0 % relativer Luftfeuchte bestimmt. Der gemessene Wert beträgt 1,0 ml/(d m² bar).

Eine Folie, die lediglich über eine im Hochvakuum aufgebrachte SiOx Schicht verfügt, zeigt im Vergleich dazu eine Sauerstoffpermeabilität von 2,5 ml/(d m² bar).

### Beispiel 4

Analog 2, jedoch mit einer reduzierten Foliengeschwindigkeit, so dass sich eine Verweilzeit von 20 Sekunden im IR Trocknungskanal ergibt. Die Folie wird dabei auf eine Temperatur von 80°C erhitzt. Es resultiert eine klare und transparente, einseitig beschichtete Folie. Die Dicke der Beschichtung beträgt ca. 500 nm. Die Sauerstoffpermeabilität einer so beschichteten Folie wird mit einem MOCON Oxtrans-Gerät bei 0 % relativer Luftfeuchte bestimmt. Der gemessene Wert beträgt 9 ml/(d m² bar).

### Beispiel 5:

Analog 2, jedoch mit einer reduzierten Foliengeschwindigkeit, so dass sich eine Verweilzeit von 28 Sekunden im IR Trocknungskanal ergibt. Die Folie wird dabei auf eine Temperatur von 86°C erhitzt. Es resultiert eine klare und transparente, einseitig beschichtete Folie. Die Dicke der Beschichtung beträgt ca. 500 nm. Die Sauerstoffpermeabilität einer so beschichteten Folie wird mit einem MOCON Oxtrans-Gerät bei 0 % relativer Luftfeuchte bestimmt. Der gemessene Wert beträgt 7 ml/(d m² bar).

### Beispiel 6:

Analog 2, jedoch mit einer erhöhter Foliengeschwindigkeit, so dass sich eine Verweilzeit von 10 Sekunden im IR Trocknungskanal ergibt. Die Folie wird dabei auf eine Temperatur von 55°C erhitzt. Es resultiert eine klare und transparente, einseitig beschichtete Folie. Die Dicke der Beschichtung beträgt ca. 500 nm. Die Sauerstoffpermeabilität einer so beschichteten Folie wird mit einem MOCON Oxtrans-Gerät bei 0 % relativer Luftfeuchte bestimmt. Der gemessene Wert beträgt 20 ml/(d m² bar).

### Beispiel 7:

Analog 3, jedoch mit einer reduzierten Foliengeschwindigkeit, so dass sich eine Verweilzeit von 22 Sekunden im IR Trocknungskanal ergibt. Die Folie wird dabei auf eine Temperatur von 82°C erhitzt. Es resultiert eine klare und transparente, einseitig beschichtete Folie. Die Dicke der Beschichtung beträgt ca. 500 nm. Die Sauerstoffpermeabilität einer so beschichteten Folie wird mit einem MOCON Oxtrans-Gerät bei 0 % relativer Luftfeuchte bestimmt. Der gemessene Wert beträgt 0,8 ml/(d m² bar).

## Patentansprüche

1. Verfahren zur kontinuierlichen Beschichtung von Folien, **dadurch gekennzeichnet, dass** man eine Lösung enthaltend ein Polysilazan oder eine Mischung von Polysilazanen der Formel (1),
-(SiR'R"-NR'")ₙ- (1)
wobei R', R", R'" gleich oder unterschiedlich sind und entweder für Wasserstoff oder einen gegebenenfalls substituierten Alkyl-, Aryl- oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist,
in einem Lösemittel und mindestens einen Katalysator auf eine Folie aufbringt und anschließen eine Trocknungsstrecke durchlaufen lässt und die Trocknung durch
Temperaturbehandlung IR- oder NIR-Strahlung im Wellenlängen bereich von 12 bis 1,2 Mikrometer bzw. 1,2 bis 0,8 Mikrometer, bei einer Strahlungsintensität von 5 - 1000 kW/m² erfolgt.

2. Verfahren nach Anspruch 1, **dadurch gekennzeichnet, dass** der Trocknungsprozess innerhalb eines Zeitraumes von weniger als 60 Sekunden, bevorzugt weniger als 30 Sekunden erfolgt.

3. Verfahren nach mindestens einem der Ansprüche 1 oder 2, **dadurch gekennzeichnet, dass** es sich bei den zu beschichtenden Folien um Polymerfolien handelt.

4. Polymerfolie, hergestellt nach einem Verfahren gemäß mindestens einer der Ansprüche 1 bis 3.

5. Polymerfolle gemäß Anspruch 4, **dadurch gekennzeichnet, dass** es sich bei dem Polymer um ein Polyolefin, Polyester, Polyamid, Polycarbonat, PMMA oder PVC handelt.

6. Polymerfolie nach Anspruch 4 und/oder 5, **dadurch gekennzeichnet, dass** die Beschichtung eine Schichtdicke im Bereich von 0,02 bis 10 Mikrometern aufweist.

7. Folienverbund, **dadurch gekennzeichnet, dass** eine oder mehrere Polymerfollen gemäß mindestens einer der Ansprüche 4 bis 6, mit einer oder mehreren anderen Polymerfolien zu einem Folienverbund zusammengefügt werden.

## Claims

1. A process for continuously coating films, **characterized in that** a solution comprising a polysilazane or a mixture of polysilazanes of the formula (1)
-(SiR'R"-NR"')ₙ- (1)
where R', R", R'" are the same or different and are each either hydrogen or an optionally substituted alkyl, aryl or (trialkoxysilyl)alkyl radical, where n is an integer which is such that the polysilazane has a number-average molecular weight of from 150 to 150 000 g/mol, in a solvent and at least one catalyst is applied to a film which is subsequently allowed to run through a drying zone, and drying is effected by thermal treatment, IR or NIR radiation in a wavelength range from 12 to 1.2 micrometers and from 1.2 to 0.8 micrometers respectively, at a radiation intensity in the range from 5 to 1000 kW/m².

2. The process as claimed in claim 1, **characterized in that** the drying process is effected within a period of fewer than 60 seconds, preferably fewer than 30 seconds.

3. The process as claimed in at least one of claims 1 or 2, **characterized in that** the films to be coated are polymer films.

4. A polymer film coated with a coating according to at least one of claims 1 to 3.

5. The polymer film as claimed in claim 4, **characterized in that** the polymer is a polyolefin, polyester, polyamide, polycarbonate, PMMA or PVC.

6. The polymer film as claimed in claim 4 and/or 5, **characterized in that** the coating has a coating thickness in the range from 0.02 to 10 micrometers.

7. A film composite, **characterized in that** one or more polymer films as claimed in at least one of claims 4 to 6 are combined with one or more other polymer films to give a film composite.

## Revendications

1. Procédé de revêtement continu de films, **caractérisé en ce que** l'on applique sur un film une solution contenant un polysilasane ou un mélange de polysilasanes de formule (1),
-(SiR'R"-NR"')ₙ- (1)
dans laquelle R', R", R"' sont identiques ou différents et désignent soit un atome d'hydrogène soit un radical alkyle, aryle ou (trialcoxysilyle)alkyle éventuellement substitué, n étant un nombre entier et n étant mesuré de telle sorte que le polysilasane présente un poids moléculaire moyen en nombre de 150 à 150 000 g/mole, dans un solvant et au moins un catalyseur, et ensuite on le soumet à un parcours de séchage et le séchage s'effectue par un traitement thermique, par rayonnement infrarouge ou infrarouge proche dans une plage de longueur d'ondes de 12 à 1,2 microns ou 1,2 à 0,8 microns, à une intensité de rayonnement de 5 à 1000 kW/m².

2. Procédé selon la revendication 1, **caractérisé en ce que** le procédé de séchage s'effectue dans un temps inférieur à 60 secondes, de préférence, inférieur à 30 secondes.

3. Procédé selon au moins l'une des revendications 1 ou 2, **caractérisé en ce que** les films à revêtir sont des films polymères.

4. Film polymère produit selon un procédé selon au moins l'une des revendications 1 à 3.

5. Film polymère selon la revendication 4, **caractérisé en ce que** le polymère est une polyoléfine, un polyester, un polyamide, un polycarbonate, un PMMA ou un PVC.

6. Film polymère selon la revendication 4 et/ou 5, **caractérisé en ce que** le revêtement présente une épaisseur de couche de l'ordre de 0,02 à 10 microns.

7. Composite de films, **caractérisé en ce que** l'on assemble un ou plusieurs films polymères selon au moins l'une des revendications 4 à 6, avec un ou plusieurs autres films polymères en un composite de films.
